# EUROPEAN PATENT SPECIFICATION

(11) **EP 4 059 773 B1**
(45) Date of publication and mention of the grant of the patent: **07.05.2025**
(21) Application number: 22162332.5
(22) Date of filing: 15.03.2022
(51) Int. Cl.: B60N 2/75

(54) **APPARATUS FOR USE WITH A VEHICLE ARMREST**
VORRICHTUNG ZUR VERWENDUNG MIT EINER ARMLEHNE FÜR FAHRZEUGE
APPAREIL DESTINÉ À ÊTRE UTILISÉ AVEC UN ACCOUDOIR DE VÉHICULE

(30) Priority: 16.03.2021 GB 202103621
(43) Date of publication of application: 21.09.2022
(73) Proprietor: Jaguar Land Rover Limited, Coventry, Warwickshire CV3 4LF (GB)
(72) Inventor: Tomaselli, Luca, Coventry, CV3 4LF (GB); Petrov, Plamen, Coventry, CV3 4LF (GB)
(74) Representative: Jaguar Land Rover Patents Department

(56) References cited:
- DE-A1- 102015 211 093
- JP-A- 2015 202 715

## Description

### TECHNICAL FIELD

The present disclosure relates to rear seat assembly for use in a vehicle, and particularly but not exclusively to a rear seat assembly comprising a flexible sheet for covering a gap between a vehicle armrest and an adjacent structure of the vehicle for use in a vehicle, and to a vehicle comprising the rear seat assembly.

### BACKGROUND

A rear seat assembly is a common module of a vehicle. The rear seat assembly typically comprises a seat on which at least one user may sit in the vehicle. The rear seat assembly may include a deployable armrest, which can be provided in a stowed state in which the armrest is at least partially received in a normally substantially vertical part of the rear seat assembly, hereinafter referred to as the seatback. The armrest may be moved from the stowed state to a deployed state, in which the armrest extends at an angle from the seatback to provide a platform on which the user may rest an arm, for example.

The armrest is typically connected to the seatback or elsewhere in the rear seat assembly by a hinged mechanism that enables rotation of the armrest about the hinge to rotate the armrest between the stowed and deployed states. The armrest may be arranged in different positions by adjusting the rotation of the armrest. For example, users may prefer different positions of the armrest depending on the size of the user. In addition, the seatback may be adjustable to provide a different inclination of the seatback with respect to the seat to provide a user with additional options which may provide additional comfort.

The armrest is typically received within the seatback and forms a part of the seatback when the armrest is in the stowed position. However, when the armrest is moved to the deployed position, a gap or void exists generally between an end of the armrest proximal to the seatback and the seatback. The gap or void arises due to the packaging volume required to store the armrest when it is received by the seatback in the stowed position, and the gap is larger when the volume of the armrest is greater. A large armrest is commonly provided in premium vehicles such as to allow for greater padding of the armrest. To provide sufficient space to accommodate the seatback receiving the armrest and to accommodate the mechanisms which enable the rotation of the armrest, a sufficiently large void must be provided in the seatback to receive the armrest in the stowed position. This results in the gap between the armrest and the seatback when the armrest is deployed.

In certain vehicles, the gap between the armrest and the seatback is undesirable because internal components of the seatback or of the armrest mechanism are exposed to the vehicle cabin, and thus the gap enables ingress of dirt into the seatback and the protection of internal components of the rear seat assembly is compromised. In addition, the gap reduces the premium appearance of the internal cabin of the vehicle, and there is a risk of belongings of the user falling into the gap and becoming trapped. Therefore, it is desirable to cover the gap between the armrest and the seatback by providing material which substantially covers the gap. However, the gap or void may change in size as the armrest and/or the seatback are moved between different positions, which increases the difficulty of covering the gap.

Previous attempts to cover the gap between the armrest and the seatback typically employ rigid or semi-rigid materials. However, such materials cannot typically be arranged to cover a gap which is of variable size. Therefore, when the size of the gap changes, known gap hiders are not able to adjust to cover the new size of the gap, and a portion of the gap remains exposed.

JP 2015 202715 A describes a cover member cover a gap bridged over a rear end portion of an armrest and a back side of a seat cushion.

DE 10 2015 211093 A1 describes an armrest arrangement with an armrest body which is movably mounted on a stationary structural part.

It is an aim of the present invention to address one or more of the disadvantages associated with the prior art. In particular, the embodiments of the invention seek to provide an apparatus which can cover a gap of variable size.

### SUMMARY OF THE INVENTION

Aspects and embodiments of the invention provide a rear seat assembly and a vehicle as claimed in the appended claims.

There is provided a rear seat assembly as set out in claim 1.

In certain embodiments, the gap is of variable size. Advantageously, the flexible sheet is held under tension by the tensioning means and continues to cover the gap despite changes in the size of the gap. Due to its flexibility, both the angle and length of the flexible sheet can be changed to accommodate changes in the size of the gap.

The armrest may be deployable from a stowed position where it is received within a void in the seatback to a position in which it extends from the seatback such that the flexible sheet covers a gap between an end of the armrest proximal to a seatback and the seatback itself.

In certain embodiments, the tensioning means may comprise a tensioning mechanism. The tensioning mechanism may comprise a rolling spring and a roller. Advantageously, the rolling spring may resiliently engage with the roller to maintain tension on the flexible sheet to accommodate a change in the size of the gap.

In certain embodiments, the apparatus may comprise a pair of laterally disposed frame sides arranged to support the tensioning means and the tension bar between the laterally disposed frame sides; and the laterally disposed frame sides may be configured for rotatably supporting the armrest there-between. Advantageously, the frame sides may provide support to the apparatus to maintain alignment of the apparatus and in particular the flexible sheet with the armrest.

In certain embodiments, the tension bar may be configured to support an intermediate portion of the flexible sheet, the intermediate portion being at a position between the first and second ends of the flexible sheet, wherein the tensioned flexible sheet is arranged over the tension bar to change direction at the intermediate portion. Advantageously, the tension bar provides flexibility as to the positioning of the flexible sheet. In certain embodiments, the change in direction of the flexible sheet may be greater than 90 degrees. Due to the change in direction of the flexible sheet, the volume for providing the apparatus may be reduced.

In certain embodiments, the tensioning means may be configured to maintain tension on the flexible sheet and to move the flexible sheet to continue to cover the gap during movement of the first end of the flexible sheet.

In certain embodiments, the flexible sheet may be connectable to the armrest by a first connection element provided at the first end of the flexible sheet. Advantageously, the first connection element may enable the flexible sheet to be easily attached to or detached from the armrest. Access to the apparatus for servicing may thereby be improved, and a flexible sheet may be easily replaced.

In certain embodiments, the apparatus may comprise a second connection element arranged to connect the flexible sheet to the tensioning means at the second end of the flexible sheet. Advantageously, the second connection element may enable the flexible sheet to be easily attached to or detached from the tensioning means. Access to the apparatus (and to the internals of the seatback in use) for servicing may thereby be improved, and a flexible sheet may be easily replaced.

In certain embodiments, the flexible sheet may have a length greater than a maximum size of the gap. Advantageously, the flexible sheet may continue to cover the gap when the gap is adjusted to any potential size. In addition, the flexible sheet may accommodate an increase in distance between the two fixing points of the flexible sheet when the armrest is stowed.

In certain embodiments, the gap to be covered by the flexible sheet in use is located between an end of the armrest proximal to the seatback and the seatback. The gap may be of variable size. Advantageously, the flexible sheet may cover a gap between the armrest and the seatback and prevent ingress of dirt into the seatback and damage of internal components of the seatback.

In certain embodiments, the rear seating assembly may comprise laterally disposed frame sides arranged to support the flexible sheet, the tensioning means and the tension bar between the laterally disposed frame sides, to hingeably support the armrest, and to connect the armrest to the seatback. Advantageously, the frame sides may support said elements to maintain alignment so that the flexible sheet can reliably cover the gap between the armrest and the seatback.

In certain embodiments, the armrest may be attached between the laterally disposed frame sides and configured to rotate about an axis perpendicular to the laterally disposed frame sides. Advantageously, as the armrest rotates about an axis perpendicular to the frame sides, the alignment of the flexible sheet with the gap between the armrest and the seatback is improved.

In certain embodiments, the tensioning means may be substantially located within the seatback. Advantageously, the tensioning means may be protected from the ingress of dirt or from potential sources of damage. Additionally, the tensioning means may be hidden from view in use and a comfort level of the vehicle may be improved.

In certain embodiments, the tensioning means may be configured to maintain tension on the flexible sheet to continue to cover the gap when the size of the gap between the armrest and the seatback varies as the armrest rotates between the stowed position and the deployed position. Advantageously, the gap between the armrest and the seatback may be covered by the flexible sheet even when the armrest is positioned at different positions by a user. Therefore, different user preferences can be accommodated without compromising on the level of cover of the gap.

In certain embodiments, the seatback may be configured to be movable, wherein the size of the gap between the armrest and the seatback changes during movement of the seatback, and the tensioning means may be configured to maintain tension on the flexible sheet to continue to cover the gap when the size of the gap between the armrest and the seatback changes during movement of the seatback. Advantageously, the gap may continue to be covered when users move the seatback, for example to accommodate different user preferences or sizes.

In certain embodiments, the tension bar may be located in the seatback and may be at least partially obscured by the seatback. Advantageously, the tension bar and a portion of the flexible sheet provided between the tension bar and the tensioning means may be protected from damage by the seatback, and a premium appearance of the vehicle cabin may be improved by obscuring the tension bar.

In certain embodiments, the rear seat assembly may comprise a shielding element provided to overlap with one or more lateral edges of the flexible sheet to partially obscure the flexible sheet. Advantageously, the coverage of the gap by the flexible sheet is improved as the shielding element provides cover to accommodate any height difference between the flexible sheet and the gap.

In certain embodiments, a first portion of the flexible sheet between the tension bar and the armrest may be held under tension to cover the gap. A second portion of the flexible sheet between the tension bar and the tensioning means may be located within the seatback and may be at least partially obscured by the seatback. The tensioning means may be configured to maintain tension on the flexible sheet and to adjust the sizes of the first portion and the second portion of the flexible sheet when the size of the gap changes in response to movement of the armrest or the seatback. Advantageously, the gap may be covered by the first portion of the flexible sheet while the second portion of the flexible sheet may be protected inside the seatback. Advantageously, the relative sizes of the first and second portions of the flexible sheet may be automatically adjusted by the tensioning means in response to movement of the armrest or the seatback to continue to cover the gap when the size of the gap is changed.

In certain embodiments, the tensioning means may comprise a rolling spring and a roller, and the rolling spring may be arranged to resiliently wrap around the roller and may be connected between the second end of the flexible sheet and the roller. The relative sizes of the first and second portions of the flexible sheet may be adjusted by winding or unwinding the rolling spring around the roller to move the flexible sheet and to control the length of the flexible sheet located on either side of the tension bar. Advantageously, the rolling spring automatically adjusts position to change the length of the flexible sheet provided to cover the gap as the gap changes size.

In certain embodiments, when the armrest is in the stowed position, the rolling spring is wound around the roller by a first amount, and when the armrest is in the deployed position, the rolling spring is wound around the roller by a second amount, the second amount being greater than the first amount. Advantageously, the flexible sheet is automatically moved by the winding or unwinding of the rolling spring as the armrest is moved between the stowed and deployed states.

There is further provided a vehicle comprising the rear seat assembly described above.

### BRIEF DESCRIPTION OF THE DRAWINGS

One or more embodiments of the invention will now be described, by way of example only, with reference to the accompanying drawings, in which:
Figure 1a shows a schematic representation of an apparatus in accordance with an embodiment of the invention, where the apparatus is in a stowed state;
Figure 1b shows a schematic representation of the apparatus in accordance with an embodiment of the invention, where the apparatus is in a deployed state;
Figure 2a shows another representation of the apparatus in accordance with an embodiment of the invention;
Figure 2b shows an exploded view of the apparatus illustrated in Figure 2a;
Figure 3a shows a representation of the apparatus of Figures 1a to 2b attached to an armrest in accordance with an embodiment of the invention, where the armrest is in a stowed state;
Figure 3b shows a representation of the apparatus of Figures 1a to 2b attached to an armrest in accordance with an embodiment of the invention, where the armrest is in a deployed state;
Figure 4 shows another representation of the apparatus attached to an armrest in accordance with an embodiment of the invention, where the armrest is in a deployed state;
Figure 5 shows a representation of a rear seat assembly in accordance with an embodiment of the invention, where an armrest is in a deployed state; and
Figure 6 shows a vehicle in accordance with an embodiment of the invention.

### DETAILED DESCRIPTION

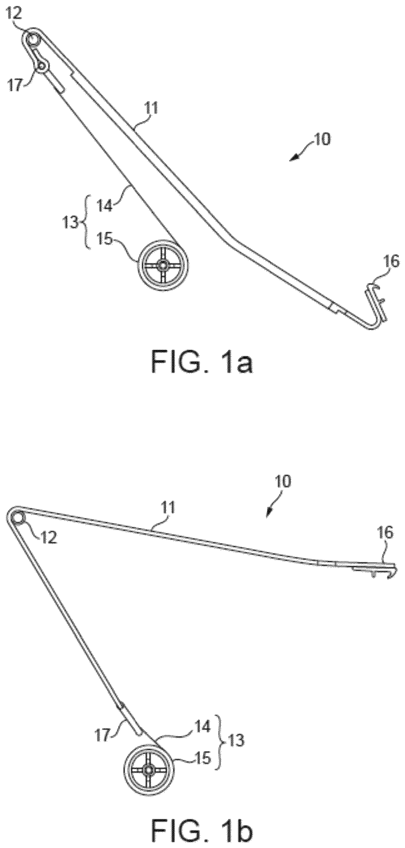

An apparatus 10 in accordance with an embodiment of the present invention is described herein with reference to the accompanying Figure 1a. Figure 1a shows a representation of the apparatus 10 in accordance with an embodiment of the present invention, where the apparatus 10 is in a stowed position. The apparatus 10 comprises a flexible sheet 11, a tension bar 12, tensioning means 13, a first connection element 16 and a second connection element 17. The tensioning mean is a tensioning mechanism arranged to apply tension to the flexible sheet 11. The tensioning means 13 of Figure 1a comprises a rolling spring 14 and a roller 15 about which the rolling spring 14 is configured to resiliently wrap. However, this is an example only and other tensioning means may be used. For example, the tensioning means 13 may be any tensioning mechanism which can be coupled to the flexible sheet 11 via the second connection element 17 and which can maintain tension on the flexible sheet 11. The flexible sheet 11 is an elongate sheet of flexible material.

The flexible sheet 11 is connected to the first connection element 16 at a first end of the flexible sheet 11 and is connected to the second connection element 17 at a second end of the flexible sheet 11. The second connection element 17 is also connected to the tensioning means 13. The tension bar 12 is provided along the length of the flexible sheet 11 to support the flexible sheet 11 between the first end and the second end of the flexible sheet 11.

The flexible sheet 11 is connectable to an armrest of a vehicle at a first end of the flexible sheet 11 by the first connection element 16. While the flexible sheet 11 is described to be connectable between to armrest of a vehicle, this is only an example, and the apparatus 10 and flexible sheet 11 may be connectable between any two structures of a vehicle. For example, the apparatus 10 including the flexible sheet 11 may be used to cover a gap existing between a seatback and base of a seat. That is, the apparatus 10 may be used to cover any gap between two structures existing inside of a vehicle, and is particularly advantageous where the gap between the two structures is of variable size due to movement of one or more of the two structures.

The first connection element 16 of the apparatus 10 of Figure 1a may be a connection clip. The first connection element 16 may have a shape that enables the first connection element 16 to engage with a corresponding part of an armrest to secure the flexible sheet 11 to the armrest. The shape of the first connection element 16 shown in Figure 1a is only an example, and the shape of the first connection element 16 may be any suitable shape for connecting securely to an armrest of a vehicle.

The flexible sheet 11 may be formed of any flexible material. For example, the flexible sheet 11 may be formed of leather, fabric polyvinyl chloride (PVC), a plastic material, or any other flexible material. The flexible sheet 11 may be formed of a material which matches a material used in the interior cabin of the vehicle, and particularly which is used for construction of a rear seat assembly provided in the rear of the vehicle. The flexible sheet 11 is flexible, as opposed to rigid. The flexible sheet 11 is sufficiently flexible to be deformable under the effects of gravity, and to be able to be held taut by the tensioning means 13. The flexible sheet 11 is sufficiently flexible to bend at the position of the tension bar 12 and to change direction by greater than 90 degrees.

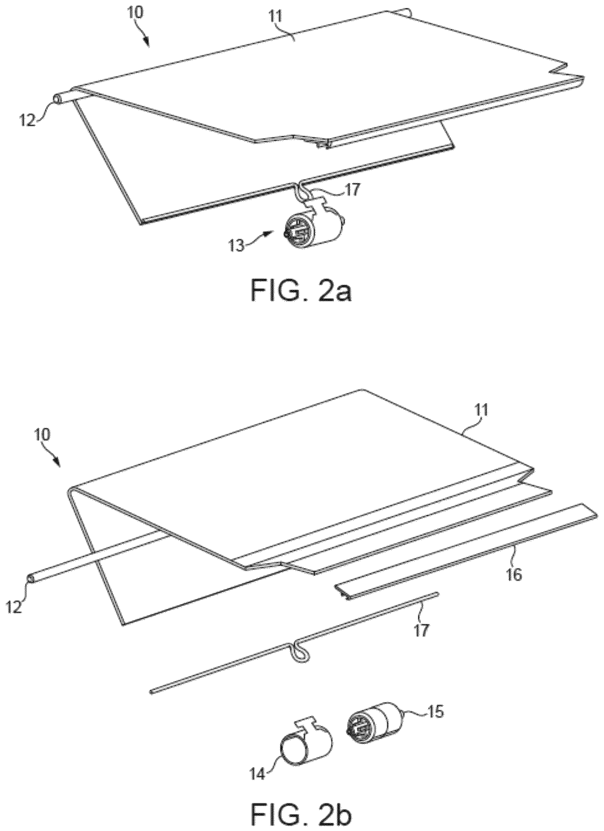

Figure 1a shows a side profile of the apparatus 10. However, the flexible sheet 11 and the other components of the apparatus 10 may also have a width as shown in Figures 2a and 2b. That is, the flexible sheet 11 of Figure 1a may be considered substantially rectangular in shape. However, the shape of the flexible sheet 11 may be different depending on the construction of the armrest and the seatback, and the corresponding shape and size of the gap to be covered.

The tension bar 12 of Figure 1a is configured to provide support to the flexible sheet 11 at a position between the first end and the second end of the flexible sheet 11. The tension bar 12 may be a cylindrical or similarly shaped element, which is securely fixable within the seatback of the vehicle in use. However, the tension bar 12 may be formed of different shapes. For example, instead of a cylindrical bar provided across the width of the flexible sheet 11, the tension bar 12 may be formed of one or more separate elements which may be attached in use to the inside of the seatback. For example, these may be elements extending from a frame provided inside the seatback which are configured to support the flexible sheet 11.

The tension bar 12 is securely fixed in use such that when the tensioning means 13 apply tension to the flexible sheet 11, the tension bar 12 is fixed and does not move in response to pressure from the flexible sheet 11. The tension bar 12 is configured to provide support to the flexible sheet 11 at a position between the first and second ends of the flexible sheet 11.

In certain embodiments, the tension bar 12 may be positioned such that the flexible sheet 11 changes direction where the flexible sheet 11 is supported by the tension bar 12. In the example of Figure 1a, the change in direction of the flexible sheet 11 where supported by the tension bar 12 is shown as being an angle greater than 90 degrees. However, the invention is not limited to this example, and the tension bar 12 may enable any change in direction of the flexible sheet 11. Advantageously, the change in direction of the flexible sheet 11 where supported by the tension bar 12 enables a reduced volume required for providing the apparatus 10. Further, the tensioning means 13 and a portion of the flexible sheet 11 between the tension bar 12 and the second connection element 17 can be obscured in use by the seatback. This provides further protection to the tensioning means 13 and the portion of the flexible sheet 11 obscured by the seatback and improves the appearance of the interior cabin of the vehicle.

The second connection element 17 is configured to connect the second end of the flexible sheet 11 to the tensioning means 13. The second connection element 17 may be any suitable connecting element for providing a connection between the flexible sheet 11 and the tensioning means 13.

The tensioning means 13 of Figure 1a comprises a rolling spring 14 and a roller 15. The rolling spring 14 is configured to resiliently wrap around the roller 15. The rolling spring 14 is a spring which is biased to a state where the rolling spring 14 is wrapped about, or wound around, the roller 15. That is, the rolling spring 14 tends toward a position where the rolling spring 14 is fully wound around the roller 15. The rolling spring 14 is thereby configured to apply tension to the second end of the flexible sheet 11 to pull the second end of the flexible sheet 11 toward the tensioning means 13.

In use, the flexible sheet 11 is attached to an armrest via the first connection element 16 and to the tensioning means 13 via the second connection element 17. The tensioning means 13 maintains tension on the flexible sheet 11. As the armrest or the seatback move, the tensioning means 13 maintain tension on the flexible sheet 11. Thereby, the position of the flexible sheet 11 with respect to the tension bar 12 is adjusted, such that a size of a first portion of the flexible sheet 11 between the tension bar 12 and the first end of the flexible sheet 11 and a size of a second portion of the flexible sheet 11 between the tension bar 12 and the second end of the flexible sheet 11 are adjusted by the action of the tensioning means in response to movement of the armrest to which the first connection element 16 connects the flexible sheet 11 in use.

Figure 1b shows the apparatus 10 of Figure 1a in different state. Figure 1a shows the apparatus 10 in a stowed state. For example, Figure 1a may be considered a representation of the apparatus 10 in a state where an armrest of a vehicle is stowed within a seatback in a rear seat assembly of the vehicle, where the first connection element 16 connects the flexible sheet 11 to the armrest in use. Figure 1b shows the apparatus 10 in a deployed state. For example, Figure 1b may be considered a representation of the apparatus 10 in a state where the armrest of the vehicle is deployed within the seatback in the rear seat assembly of the vehicle. The apparatus 10 of Figure 1b is the same as the apparatus 10 of Figure 1a.

In the stowed state shown in Figure 1a, the tensioning means 13 may be in a first state. In the example of Figure 1a, where the tensioning means 13 comprises a rolling spring 14 and a roller 15, the rolling spring 14 is wrapped about the roller 15 by a first amount. In the deployed state of Figure 1b, the tensioning means 13 is in a second state. In the example where the tensioning means 13 comprises the rolling spring 14 and the roller 15, the rolling spring is wrapped about the roller 15 by a second amount. In the example of Figures 1a and 1b, the second amount is greater than the first amount. In the first state, the rolling spring 14 may be fully unwound, and in the second state, the rolling spring may be fully wound about the roller 15. However, the invention is not limited to the first and second states respectively corresponding to the rolling spring 14 being fully unwound and fully wound about the roller 15. Alternatively, the rolling spring 14 may provide a greater range of movement and may be partially wound in both the first and the second states.

Comparison of Figures 1a and 1b shows that as the apparatus 10 is moved from the stowed state to the deployed state, the tensioning means 13 applies maintains tension on the flexible sheet 11. As the distance between the tension bar 12 and the first end of the flexible sheet 11 (and the first connection element 16) changes in response to movement of the first end of the flexible sheet 11, the tension applied by the tensioning means 13 to the flexible sheet 11 results in movement of the flexible sheet 11. In this case, the flexible sheet 11 is moved such that there is a greater amount of the flexible sheet 11 positioned between the tension bar 12 and the tensioning means 13. The first portion of the flexible sheet 11 between the tension bar 12 and the first end of the flexible sheet 11 is reduced. The first portion of the flexible sheet 11 is therefore held taut between the tension bar 12 and the first end of the flexible sheet 11. Thereby, the first portion of the flexible sheet 11 can be provided to cover a gap existing between the armrest and the seatback of a vehicle.

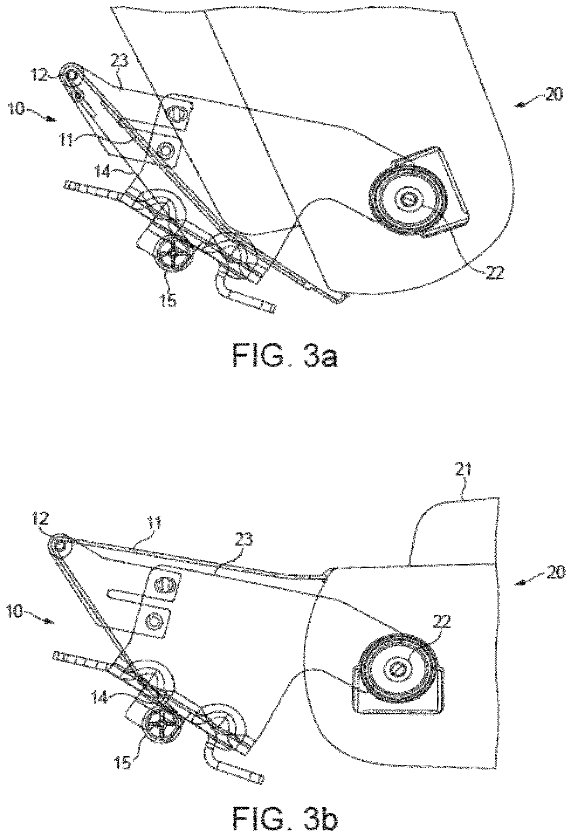

Advantageously, by maintaining tension on the flexible sheet 11, the first portion of the flexible sheet 11 is automatically adjusted by the tensioning means 13 to respond to changes in distance between the tensioning means 13 and the first end of the flexible sheet 11. In use, the first end of the flexible sheet 11 is attached to a vehicle armrest via the first connection element 16. As the armrest moves between the stowed state and the deployed state, the flexible sheet 11 is moved to cover a gap existing between the armrest and the seatback. This is shown with respect to Figures 3 to 5.

Figures 2a and 2b show a different representation of an apparatus 10 such as the apparatus 10 of Figures 1a and 1b. In the example of Figure 2a, the tension bar 12 is illustrated as being provided across the entire width of the flexible sheet 11. However, as discussed above the invention is not limited to this example, and the tension bar 12 may be formed to support the flexible sheet 11 across a different proportion of the width of the flexible sheet 11.

In the example of Figure 2a, the second connection element 17 is a connection bar comprising a straight portion and a looped portion. The straight portion is attached across the width of the second end of the flexible sheet 11 and the looped portion is configured to engage with the tensioning means 13. However, the second connection element may be any shape suitable for providing a secure connection between the second end of the flexible sheet 11 and the tensioning means 13.

Figure 2b shows an exploded view of the apparatus 10 of Figure 2a. In the example of Figure 2b, the first connection element 16 is represented as a connection clip, however, the invention is not limited thereto and the first connection element 16 may be any suitable connection element for providing a connection between the first end of the flexible sheet 11 and a part of the vehicle such as the armrest in use. In the example of Figure 2b, the first connection element 16 is a connection clip configured to attach across a width of the flexible sheet 11 at the first end of the flexible sheet 11. The first connection element 16 of Figure 2b is formed with a shape such that the first connection element 16 is attachable to an armrest of the vehicle. For example, the first connection element 16 may be formed with protruding teeth which are arranged to engage in use with correspondingly shaped elements on the armrest and thereby secure the flexible sheet 11 to the armrest.

The roller 15 of Figure 2b is shown as substantially cylindrical, but the invention is not limited thereto. The rolling spring 14 of Figure 2b is configured to resiliently wrap about the roller 15. The rolling spring 14 and the roller 15 of Figure 2b have complementary shapes.

Although not shown in Figures 1a to 2b, the apparatus 10 may comprise a pair of laterally disposed frame sides, between which the flexible sheet 11, the tension bar 12, and the tensioning means 13 may be supported. In certain embodiments, the laterally disposed frame sides may be provided in use inside the seatback and thus be obscured from view. Alternatively, the laterally disposed frame sides may only support certain components of the apparatus 10, and other components of the apparatus 10 may be fixed directly to an internal structure of the seatback or rear seat assembly.

Figures 3a and 3b show a representation of an apparatus 10 according to an embodiment of the invention in use, where the apparatus 10 is connected to an armrest 20 of a vehicle. Figure 3a shows a representation where the armrest 20 is in the stowed state, and Figure 3b shows a representation where the armrest 20 is in the deployed state. Here, in the stowed state, the armrest 20 is positioned substantially vertical, or substantially in a plane with a seatback of a seating assembly in a vehicle, such that the armrest 20 may be received by the seatback. In the deployed state, the armrest 20 extends at an angle from the seatback. In use, the armrest 20 may be deployed by a user for the user to rest on a surface 21 of the armrest 20, for example.

The armrest 20 of Figures 3a and 3b comprises a surface 21 on which a user may rest, a connection point 22 and a support frame 23. In use, the armrest 20 may be provided in a rear seat assembly in a vehicle. The rear seat assembly may include seating on which one or more users can sit, and a seatback providing a surface to support a user's back. The armrest 20 may be provided as part of the rear seat assembly in use. In certain embodiments, the armrest 20 may be provided in a central position in the seatback of the rear seat assembly, and therefore may be provided substantially in the middle of the interior cabin of a vehicle. The armrest 20 may be arranged to move between a stowed state in which the armrest 20 is at least partially received by the seatback, and a deployed state in which the armrest 20 extends from the seatback. The surface 21 of the armrest 20 is a portion of the armrest 20 which is provided in use to the interior of a vehicle, and may for example be provided to support a user's arm. The connection point 22 is configured to enable the armrest 20 to rotate relative to the seatback to move the armrest 20 between the deployed state and the stowed state. For example, the connection point 22 may be a hinge or similar rotation mechanism, such that the armrest 20 is rotatable about the hinge.

The support frame 23 of the armrest 20 is connectable in use to the seatback. The support frame 23 of the armrest 20 may include the pair of laterally disposed frame sides. For example, the support frame 23 of the armrest 20 may be configured to support the apparatus 10 including the flexible sheet 11, the tension bar 12 and the tensioning means 13. The support frame 23 of the armrest 20 is fixed in use to the seatback, and may not be moveable with respect to the seatback in use. In Figures 3a and 3b, the apparatus 10 of Figures 1a to 2b is attached to the armrest 20 by the first connection element 17 at the first end of the flexible sheet 11. The tension bar 12 and tensioning means 13 are provided at an end of the armrest 20 proximal to the seatback.

In the example of Figure 3a, the armrest 20 is in the stowed state. In this state, the armrest 20 is received in use by the seatback and the flexible sheet 11 of the apparatus is packaged behind the armrest 20 (i.e., within the seatback in use). The flexible sheet 11 is held under tension between the armrest 20 and the tensioning means 13. The tension bar 12 enables a change in direction of the flexible sheet 11 which reduces the packaging volume of the apparatus 10.

In the example of Figure 3b, the armrest 20 is in the deployed state. Here, the flexible sheet 11 is provided to cover the gap between an end of the armrest 20 proximal to the seatback and the seatback. The flexible sheet 11 thereby is provided to obscure the support frame 23 as well as the interior of the seatback. The flexible sheet 11 is held under tension between the armrest 20 and the tensioning means 13. As such, the flexible sheet 11 is positioned to cover the gap between the armrest 20 and the seatback. Internal components of the seatback are thereby protected and ingress of dirt is prevented.

As the armrest 20 is moved from the stowed state of Figure 3a to the deployed state of Figure 3b, the first end of the flexible sheet 11 is moved with the armrest 20 in dependence on the connection between the flexible sheet 11 and the armrest 20. In response to the movement of the armrest 20 and the first end of the flexible sheet 11, the tensioning means 13 moves to maintain tension on the flexible sheet 11. In the example of Figure 3a, the tensioning means comprises the rolling spring 14 and the roller 15, and the rolling spring 14 is wound about the roller 15 as the armrest 20 moves from the stowed state to the deployed state. When the armrest 20 is moved between the deployed state and the stowed state, the rolling spring 14 is unwound about the roller 15. The movement of the rolling spring 14 changes a length of a first portion of the flexible sheet 11 provided between the tension bar 12 and the armrest 20. Thus, the flexible sheet 11 is moved to accommodate the change in the size of the gap between the armrest 20 and the seatback. Advantageously, the flexible sheet 11 is always held under tension by the tensioning means 13 independently of the position of the armrest 20, and therefore the flexible sheet 11 is positioned correctly and held taut to cover the gap even when the armrest 20 is moved between different positions.

In certain vehicles, the seatback may also be movable with respect to the armrest 20. For example, a user may be able to adjust the seatback to recline the seatback to personalise the seating position. This may also result in a change in the size of the gap between the armrest 20 and the seatback. The apparatus 10 of Figures 1 to 3 can also accommodate this change in size of the gap, because the flexible sheet 11 is always held under tension and the length of the flexible sheet 11 provided to cover the gap is adjusted by the tensioning means 13.

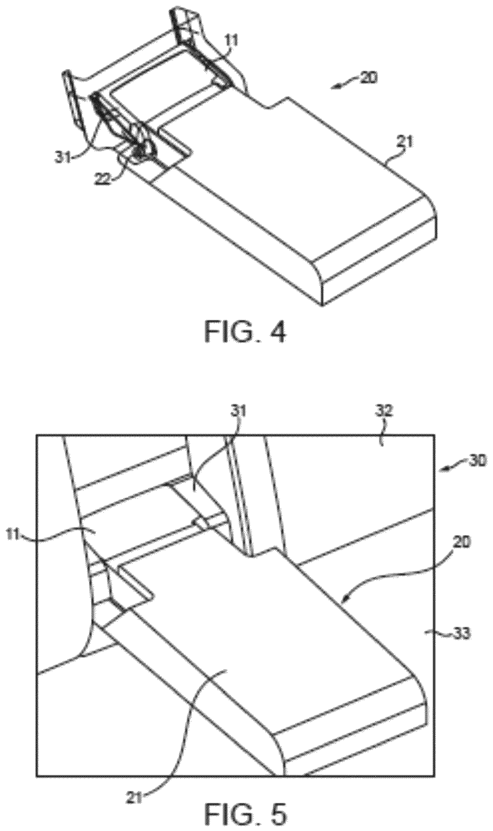

Figure 4 shows a representation of the armrest 20 of Figure 3b, where the armrest 20 is in the deployed state. As can be seen in Figure 4, the flexible sheet 11 is provided to cover a gap between the armrest 20 and the seatback in use when the armrest 20 is deployed. In the example of Figure 4, the rear seat assembly comprises a shielding element 31, provided to overlap with one or more lateral edges of the flexible sheet 11 to partially obscure the flexible sheet 11. The shielding element 31 may be fixed within a recess in the seatback, said recess being provided to accommodate the armrest 20 in the stowed position. Advantageously, the shielding element 31 partially obscures the flexible sheet 11 to improve the coverage of the gap between the armrest 20 and the seatback. For example, the shielding element 31 may accommodate for any height difference between the flexible sheet 11 and the armrest 20 due to the position of the armrest 20. The shielding element 31 also obscures the lateral sides of the flexible sheet 11 to obscure the interior of the seatback when the gap is viewed from a range of angles.

Figure 5 shows a representation of a rear seat assembly 30 according to an embodiment of the invention. The rear seat assembly 30 comprises a seatback 32, a seat 33, an armrest 20 such as the armrest 20 of Figures 3a to 4, and an apparatus 10 including a flexible sheet 11 such as the apparatus 10 of Figures 1a to 2b. The rear seat assembly 30 is for installing in the rear of a vehicle in use, to provide a seating area for passengers.

The armrest 20 of Figure 5 is movable between a stowed state where the armrest 20 is at least partially received by the seatback 32, and a deployed state where the armrest 20 extends from the seatback 32 to be positioned over the seat 33 and to provide a surface 21 to support a user's arm, for example. The armrest 20 is movable between the stowed and the deployed states by rotation around an axis proximal to the seatback 32 at an end of the armrest 20. The axis of rotation is substantially perpendicular to the seatback 32. To accommodate receiving the armrest 20 in the stowed state, the seatback 32 includes a void for receiving the armrest 20. As explained above, when the armrest 20 is in the deployed state, a gap exists between the end of the armrest 20 proximal to the seatback 32 and the seatback 32. The apparatus 10 is provided to cover the gap and to protect the internal parts of the rear seat assembly 30.

As the armrest 20 moves between the stowed and deployed states, the flexible sheet 11 is automatically positioned by the apparatus 10, and in particular by the tensioning means 13, to cover the gap. The length of the flexible sheet 11 which is provided to cover the gap is adjusted in response to changes in the size of the gap due to movement of the armrest 20 or the seatback 32. In certain embodiments, the seatback 32 may be moveable, such that a user can change the inclination of the seatback 32.

The tension bar 12 and the tensioning means 13 of the apparatus 10 of Figures 1a to 2b are provided within the seatback 32 or partly below the seat 33 in use. Thereby, the tension bar 12 and the tensioning means 13 of the apparatus 10, as well as the second portion of the flexible sheet 11 provided between the tension bar 12 and the tensioning means 13, are obscured by the seatback 32 or the seat 33 and are protected from damage.

The rear seat assembly 30 of Figure 5 comprises the shielding element 31 provided to shield at least one lateral edge of the flexible sheet 11. This improves the coverage of the gap, and also protects the flexible sheet 11 from damage. However, the shielding element 31 may be omitted in certain embodiments.

In certain embodiments, the rear seat assembly 30 may comprise a pair of laterally disposed support frames configured to support the apparatus 10. Alternatively, the pair of laterally disposed support frames may be configured to support only parts of the apparatus 10, such as the tension bar 12 or the tensioning means 13, and other parts of the apparatus 10 may be supported by alternative means within the seatback 32 or the seat 33. The laterally disposed support frames may also hingeably support the armrest 20 proximal to the seatback 32. The armrest 20, when supported by the laterally disposed support frames, is rotatable about an axis perpendicular to and passing through the pair of laterally disposed support frames.

In certain embodiments, the shielding element 31 may be integrally formed with the laterally disposed support frames. Alternatively, these may be separately formed. In certain embodiments, the shielding element 31 may act as the support to support the apparatus 10 and to hingeably support the armrest 20.

Although not shown in Figure 5, the rear seat assembly 30 comprises the tension bar 12 and the tensioning means 13 of the apparatus 10 described above with reference to Figures 1a to 2b.

In certain embodiments, the flexible sheet 11 is attached to the armrest 20 by the first connection element 16. The first connection element 16 may be a connection clip that facilitates easy attachment and removal of the flexible sheet 11 from the armrest 20. Advantageously, the flexible sheet 11 and armrest 20 can be easily separated, for example to replace the flexible sheet 11 if damaged, or to access the armrest 20 or within the seatback 32 to service the vehicle.

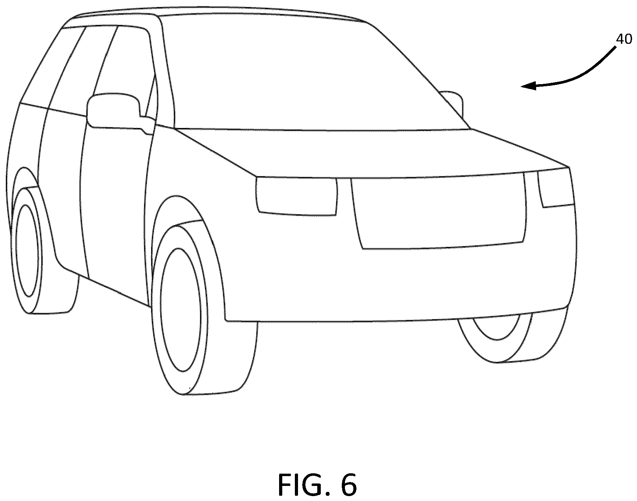

Figure 6 shows a vehicle 40 according to an embodiment of the invention. The vehicle 40 comprises the apparatus 10 of Figures 1a to 2b, the armrest 20 of Figures 3a to 4, and/or the rear seat assembly 30 of Figure 5.

## Claims

1. A rear seat assembly (30) for use in a vehicle, the rear seat assembly comprising:
a seatback (32);
an armrest (20) hingeably mounted in relation to the seatback and configured to move from a stowed position in which the armrest (20) is at least partially received in the seatback (32), to a deployed position in which the armrest (20) extends from the seatback (32); and
an apparatus comprising:
a flexible sheet (11) for covering a gap between the armrest (20) and the seatback, the flexible sheet (11) having a first end attached to the armrest (20);
tensioning means (13) attached to a second end of the flexible sheet (11), wherein the tensioning means (13) is arranged to apply tension to the flexible sheet (11); **characterised in that** the apparatus further comprises
a tension bar (12) positioned between the first end and the tensioning means (13) such that the flexible sheet (11) is maintained in tension by the tensioning means (13) over the tension bar (12).

2. The rear seating assembly of claim 1, comprising laterally disposed frame sides arranged to:
support the flexible sheet (11), the tensioning means (13) and the tension bar (12) between the laterally disposed frame sides;
hingeably support the armrest (20); and
connect the armrest (20) to the seatback (32).

3. The rear seat assembly of claim 1 or 2, wherein the tensioning means (13) is substantially located within the seatback (32).

4. The rear seat assembly of any of claims 1 to 3, wherein the tensioning means (13) is configured to maintain tension on the flexible sheet (11) to continue to cover the gap when the size of the gap between the armrest (20) and the seatback varies as the armrest (20) rotates between the stowed position and the deployed position.

5. The rear seat assembly of any of claims 1 to 4, wherein the seatback (32) is configured to be movable, wherein the size of the gap between the armrest (20) and the seatback (32) changes during movement of the seatback (32); and
wherein the tensioning means (13) is configured to maintain tension on the flexible sheet (11) to continue to cover the gap when the size of the gap between the armrest (20) and the seatback (32) changes during movement of the seatback (32).

6. The rear seat assembly of any of claims 1 to 5, wherein the tension bar (12) is located in the seatback (32) and is at least partially obscured by the seatback (32).

7. The rear seat assembly of any of claims 1 to 6, comprising a shielding element (31) provided to overlap with one or more lateral edges of the flexible sheet (11) to partially obscure the flexible sheet (11).

8. The rear seat assembly of any of claims 1 to 7, wherein a first portion of the flexible sheet (11) between the tension bar (12) and the armrest (20) is held under tension to cover the gap;
wherein a second portion of the flexible sheet (11) between the tension bar (12) and the tensioning means (13) is located within the seatback and is at least partially obscured by the seatback (32); and
wherein the tensioning means (13) is configured to maintain tension on the flexible sheet (11) and to adjust the sizes of the first portion and the second portion of the flexible sheet when the size of the gap changes in response to movement of the armrest (20) or the seatback (32)

9. The rear seat assembly of claim 8, wherein the tensioning means (13) comprises a rolling spring (14) and a roller (15); and
wherein the rolling spring (14) is arranged to resiliently wrap around the roller (15) and is connected between the second end of the flexible sheet (11) and the roller (15); and
wherein the tensioning means (13) is configured to adjust the sizes of the first portion of the flexible sheet and the second portion of the flexible sheet by winding or unwinding the rolling spring (14) to move the flexible sheet (11) and to control the length of the flexible sheet located on either side of the tension bar (12).

10. The rear seat assembly of claim 9, wherein when the armrest is in the stowed position, the rolling spring (14) is wound around the roller (15) by a first amount, and wherein when the armrest is in the deployed position, the rolling spring (14) is wound around the roller (15) by a second amount, the second amount being greater than the first amount.

11. A vehicle comprising a rear seat assembly (30) according to any one of claims 1 to 10.

## Patentansprüche

1. Rücksitzanordnung (30) zur Verwendung in einem Fahrzeug, wobei die Rücksitzanordnung umfasst:
eine Rückenlehne (32);
eine Armlehne (20), die schwenkbar in Bezug auf die Rückenlehne angebracht ist und so konfiguriert ist, dass sie sich aus einer verstauten Position, in der die Armlehne (20) zumindest teilweise in der Rückenlehne (32) aufgenommen ist, in eine ausgeklappte Position bewegt, in der die Armlehne (20) aus der Rückenlehne (32) herausragt; und
eine Einrichtung, umfassend:
eine flexible Folie (11) zum Abdecken einer Lücke zwischen der Armlehne (20) und der Rückenlehne, wobei die flexible Folie (11) an einem ersten Ende an der Armlehne (20) angebracht ist;
ein Spannmittel (13), das an einem zweiten Ende der flexiblen Folie (11) angebracht ist, wobei das Spannmittel (13) dazu angeordnet ist, Spannung auf die flexible Folie (11) auszuüben; **dadurch gekennzeichnet, dass** die Einrichtung ferner umfasst
eine Spannstange (12), die zwischen dem ersten Ende und dem Spannmittel (13) positioniert ist, so dass die flexible Folie (11) durch das Spannmittel (13) über der Spannstange (12) in Spannung gehalten wird.

2. Rücksitzanordnung nach Anspruch 1, die seitlich gelegene Rahmenseiten umfasst, die angeordnet sind zum:
Stützen der flexiblen Folie (11), des Spannmittels (13) und der Spannstange (12) zwischen den seitlich angeordneten Rahmenseiten;
schwenkbaren Stützen der Armlehne (20); und
Verbinden der Armlehne (20) mit der Rückenlehne (32).

3. Rücksitzanordnung nach Anspruch 1 oder 2, wobei sich das Spannmittel (13) im Wesentlichen innerhalb der Rückenlehne (32) befindet.

4. Rücksitzanordnung nach einem der Ansprüche 1 bis 3, wobei das Spannmittel (13) so konfiguriert ist, dass es die Spannung auf der flexiblen Folie (11) aufrechterhält, um den Spalt weiterhin abzudecken, wenn sich die Größe des Spalts zwischen der Armlehne (20) und der Rückenlehne ändert, wenn die Armlehne (20) zwischen der verstauten Position und der ausgeklappten Position wechselt.

5. Rücksitzanordnung nach einem der Ansprüche 1 bis 4, wobei die Rückenlehne (32) beweglich ausgebildet ist, wobei sich die Größe des Spalts zwischen der Armlehne (20) und der Rückenlehne (32) während der Bewegung der Rückenlehne (32) ändert; und
wobei das Spannmittel (13) so konfiguriert ist, dass es die Spannung auf der flexiblen Folie (11) aufrechterhält, um den Spalt weiterhin zu bedecken, wenn sich die Größe des Spalts zwischen der Armlehne (20) und der Rückenlehne (32) während der Bewegung der Rückenlehne (32) ändert.

6. Rücksitzanordnung nach einem der Ansprüche 1 bis 5, wobei sich die Spannstange (12) in der Rückenlehne (32) befindet und zumindest teilweise durch die Rückenlehne (32) verdeckt wird.

7. Rücksitzanordnung nach einem der Ansprüche 1 bis 6, mit einem Abschirmelement (31), das so vorgesehen ist, dass es sich mit einer oder mehreren Seitenkanten der flexiblen Folie (11) überlappt, um die flexible Folie (11) teilweise zu verdecken.

8. Rücksitzanordnung nach einem der Ansprüche 1 bis 7, wobei ein erster Abschnitt der flexiblen Folie (11) zwischen der Spannstange (12) und der Armlehne (20) unter Spannung gehalten wird, um den Spalt abzudecken;
wobei sich ein zweiter Abschnitt der flexiblen Folie (11) zwischen der Spannstange (12) und dem Spannmittel (13) innerhalb der Rückenlehne befindet und zumindest teilweise durch die Rückenlehne (32) verdeckt wird; und
wobei das Spannmittel (13) so konfiguriert ist, dass es die Spannung auf der flexiblen Folie (11) aufrechterhält und die Größen des ersten Abschnitts und des zweiten Abschnitts der flexiblen Folie anpasst, wenn sich die Größe des Spalts als Reaktion auf die Bewegung der Armlehne (20) oder der Rückenlehne (32) ändert.

9. Rücksitzanordnung nach Anspruch 8, wobei das Spannmittel (13) eine Rollfeder (14) und eine Rolle (15) umfasst; und
wobei die Rollfeder (14) so angeordnet ist, dass sie sich elastisch um die Rolle (15) wickelt und zwischen dem zweiten Ende der flexiblen Folie (11) und der Rolle (15) verbunden ist; und
wobei das Spannmittel (13) so konfiguriert ist, dass es die Größen des ersten Abschnitts der flexiblen Folie und des zweiten Abschnitts der flexiblen Folie durch Auf- oder Abwickeln der Rollfeder (14) einstellt, um die flexible Folie (11) zu bewegen und die Länge der flexiblen Folie, die sich auf beiden Seiten der Spannstange (12) befindet, zu steuern.

10. Rücksitzanordnung nach Anspruch 9, wobei die Rollfeder (14) um einen ersten Betrag um die Rolle (15) gewickelt ist, wenn sich die Armlehne in der verstauten Position befindet, und wobei die Rollfeder (14) um einen zweiten Betrag um die Rolle (15) gewickelt ist, wenn sich die Armlehne in der ausgeklappten Position befindet, wobei der zweite Betrag größer als der erste Betrag ist.

11. Fahrzeug, umfassend eine Rücksitzanordnung (30) nach einem der Ansprüche 1 bis 10.

## Revendications

1. Ensemble siège arrière (30) destiné à être utilisé dans un véhicule, l'ensemble siège arrière comprenant :
un dossier de siège (32) ;
un accoudoir (20) monté de manière articulée par rapport au dossier de siège et conçu pour passer d'une position de rangement dans laquelle l'accoudoir (20) est au moins partiellement reçu dans le dossier de siège (32), à une position de déploiement dans laquelle l'accoudoir (20) s'étend hors du dossier de siège (32) ; et
un appareil comprenant :
une feuille souple (11) destinée à couvrir un espace entre l'accoudoir (20) et le siège de dossier, la feuille souple (11) présentant une première extrémité fixée à l'accoudoir (20) ;
un moyen de tension (13) fixé à une seconde extrémité de la feuille souple (11), dans lequel le moyen de tension (13) est conçu pour appliquer une tension à la feuille souple (11) ; **caractérisé en ce que** l'appareil comprend en outre
une barre de tension (12) positionnée entre la première extrémité et le moyen de tension (13) de telle sorte que la feuille souple (11) est maintenue en tension par le moyen de tension (13) sur la barre de tension (12).

2. Ensemble siège arrière selon la revendication 1, comprenant des côtés de cadre disposés latéralement conçus pour :
soutenir la feuille souple (11), le moyen de tension (13) et la barre de tension (12) entre les côtés de cadre disposés latéralement ;
soutenir de manière articulée l'accoudoir (20) ; et
relier l'accoudoir (20) au dossier du dossier de siège (32).

3. Ensemble siège arrière selon la revendication 1 ou 2, dans lequel le moyen de tension (13) est sensiblement situé à l'intérieur du dossier de siège (32).

4. Ensemble siège arrière selon l'une quelconque des revendications 1 à 3, dans lequel le moyen de tension (13) est conçu pour maintenir la tension sur la feuille souple (11) afin de continuer à couvrir l'espace lorsque la taille de l'espace entre l'accoudoir (20) et le dossier de siège varie lorsque l'accoudoir (20) pivote entre la position de rangement et la position de déploiement.

5. Ensemble siège arrière selon l'une quelconque des revendications 1 à 4, dans lequel le dossier de siège (32) est conçu pour être déplaçable, dans lequel la taille de l'espace entre l'accoudoir (20) et le dossier de siège (32) change lors du déplacement du dossier de siège (32) ; et
dans lequel le moyen de tension (13) est conçu pour maintenir la tension sur la feuille souple (11) afin de continuer à couvrir l'espace lorsque la taille de l'espace entre l'accoudoir (20) et le dossier de siège (32) change pendant le déplacement du dossier de siège (32).

6. Ensemble siège arrière selon l'une quelconque des revendications 1 à 5, dans lequel la barre de tension (12) est située dans le dossier de siège (32) et est au moins partiellement masquée par le dossier de siège (32).

7. Ensemble siège arrière selon l'une quelconque des revendications 1 à 6, comprenant un élément de protection (31) prévu pour se superposer à un ou plusieurs bords latéraux de la feuille souple (11) afin de cacher partiellement la feuille souple (11).

8. Ensemble siège arrière selon l'une quelconque des revendications 1 à 7, dans lequel une première partie de la feuille souple (11) entre la barre de tension (12) et l'accoudoir (20) est maintenue sous tension pour couvrir l'espace ;
dans lequel une seconde partie de la feuille souple (11) entre la barre de tension (12) et le moyen de tension (13) est située à l'intérieur du dossier de siège et est au moins partiellement cachée par le dossier de siège (32) ; et
dans lequel le moyen de tension (13) est conçu pour maintenir la tension sur la feuille souple (11) et pour régler les dimensions de la première partie et de la seconde partie de la feuille souple lorsque la taille de l'espace change en réponse au mouvement de l'accoudoir (20) ou du dossier de siège (32)

9. Ensemble siège arrière selon la revendication 8, dans lequel le moyen de tension (13) comprend un ressort de roulement (14) et un rouleau (15) ; et
dans lequel le ressort de roulement (14) est conçu pour s'envelopper de manière élastique autour du rouleau (15) et est relié entre la seconde extrémité de la feuille souple (11) et le rouleau (15) ; et
dans lequel le moyen de tension (13) est conçu pour régler les tailles de la première partie de la feuille souple et de la seconde partie de la feuille souple en enroulant ou en déroulant le ressort de roulement (14) pour déplacer la feuille souple (11) et pour commander la longueur de la feuille souple située de part et d'autre de la barre de tension (12).

10. Ensemble siège arrière selon la revendication 9, dans lequel, lorsque l'accoudoir est en position de rangement, le ressort de roulement (14) est enroulé autour du rouleau (15) d'une première quantité, et dans lequel, lorsque l'accoudoir est en position de déploiement, le ressort de roulement (14) est enroulé autour du rouleau (15) d'une seconde quantité, la seconde quantité étant supérieure à la première quantité.

11. Véhicule comprenant un ensemble siège arrière (30) selon l'une quelconque des revendications 1 à 10.
